# EUROPEAN PATENT APPLICATION

(11) **EP 4 650 785 A1**
(43) Date of publication of application: **19.11.2025**
(21) Application number: 25171539.7
(22) Date of filing: 22.04.2025
(51) Int. Cl.: G01P 1/02, G01C 19/5783, G01P 1/00, G01D 11/24, G01D 11/30

(54) **ENHANCED INERTIAL SENSOR MECHANICS BY ATTACHING SENSOR LIDS TO SUPPORT STRUCTURE**

(30) Priority: 14.05.2024 US 202418663725
(71) Applicant: Honeywell International Inc., Charlotte, NC 28202 (US)
(72) Inventor: BROWN, Andrew Roberts, Charlotte, 28202 (US); DUFFY, Patrick, Charlotte, 28202 (US); GNERLICH, Markus Hans, Charlotte, 28202 (US); LEBRON, Pedro Luis, Charlotte, 28202 (US)
(74) Representative: Haseltine Lake Kempner LLP

(57) **Abstract**

A sensor assembly comprises a case structure, a support structure having a plurality of surfaces and located within the case structure, and at least one sensor package having a sensor lid. The sensor lid is mechanically coupled to one of the surfaces of the support structure. At least one sensor board is connected to the at least one sensor package. At least one isolator structure is coupled between at least one of the surfaces of the support structure and the case structure.

## Description

### BACKGROUND

Inertial sensors such as micro-electro-mechanical systems (MEMS) inertial sensors often are negatively affected by resonant mechanical modes, stress, or misalignment of supporting structures that the sensors are mounted to, especially as such structures shift over temperature and aging. These problems are made worse by circuit boards that the sensors are mounted on, which often introduce extra error sources and are made up of composite materials that are not as mechanically stable as desired. For example, it is common practice to solder a sensor to a circuit board, and then screw/bolt the circuit board to a supporting structure. This arrangement, however, creates many mechanical interfaces and different resonant modes that can negatively interact with the sensor.

### SUMMARY

A sensor assembly comprises a case structure, a support structure having a plurality of surfaces and located within the case structure, and at least one sensor package having a sensor lid. The sensor lid is mechanically coupled to one of the surfaces of the support structure. At least one sensor board is connected to the at least one sensor package. At least one isolator structure is coupled between at least one of the surfaces of the support structure and the case structure.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a schematic diagram of a sensor assembly, according to one embodiment;
Figure 2 is a schematic diagram of a sensor assembly, according to another embodiment;
Figure 3 is a schematic diagram of a sensor assembly, according to a further embodiment;
Figure 4 is a schematic diagram of a sensor assembly, according to an alternative embodiment; and
Figure 5 is a schematic diagram of an inertial measurement unit (IMU), according to one example embodiment.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

An approach for providing enhanced inertial sensor mechanics is described herein, in which a sensor lid of an inertial sensor package is attached to a support structure. The present approach is particularly useful in the construction of an a inertial measurement unit (IMU), which employs an integrated sensor assembly (ISA).

In the present technique, a sensor can be mounted in an ISA by attaching or bonding a lid of the sensor to a support structure of the ISA. This approach avoids the need to use a printed circuit board as a mechanical element, and can result in a much stiffer ISA, which pushes offending mechanical modes to higher frequencies, out of the range of the sensors. In one embodiment, a sensor lid can be directly attached to the supporting structure of the ISA. In another embodiment, a mounting plate can be bonded or soldered to the sensor, with the mounting plate then being bolted to the supporting structure of the ISA.

The present approach of attaching a sensor lid to a support structure creates stiffer ISA assemblies, which avoids mechanical modes interacting with the sensors, and can provide an improved gyroscope bias over temperature in an IMU. For example this technique has been shown to provide about a 10 times improvement in sensor performance, fixing many mechanical problems with circuit boards in an ISA.

In general, a sensor lid can be mechanically coupled tightly to a surface of a support structure, such that no unwanted lower frequency modes are introduced to an ISA. As used herein, mechanically coupled "tightly" means that there is intimate mechanical contact with no slipping or movement of two surfaces relative to each other over temperature. These two surfaces act as a uniform body up through the operating frequencies of the sensors. While there can eventually be a high frequency mode between the two surfaces, this mode is so much higher than the sensor's frequency that it does not have any energy that would cause a sensor error.

Further details of various embodiments are described hereafter and with reference to the drawings.

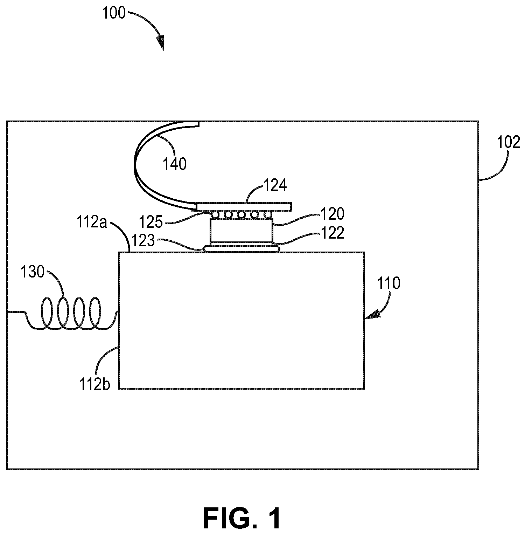

Figure 1 illustrates a sensor assembly 100, according to one embodiment, which can be implemented in an ISA. The sensor assembly 100 comprises an outer case structure 102, and an isolated support structure 110 having a plurality of surfaces 112 and located within outer case structure 102. A sensor package 120 has a sensor lid 122 that is mechanically coupled to a surface 112a of isolated support structure 110. A sensor board 124 is connected to a side of sensor package 120 opposite from sensor lid 122. At least one isolator structure 130 is coupled between a surface 112b of isolated support structure 110 and outer case structure 102.

In one embodiment, sensor package 120 includes one or more inertial sensors, such as one or more gyroscopes, and one or more accelerometers. For example, the inertial sensors can include micro-electro-mechanical systems (MEMS) inertial sensors.

The sensor lid 122 can be mechanically coupled to surface 112a of isolated support structure 110 by various techniques, such as by an epoxy 123 (or solder, weld, or the like). The sensor board 124 can be a printed circuit board (PCB), and can be connected to sensor package 120 by various techniques, such by solder balls 125 (or conductive adhesive, or the like). The isolator structure 130 can be a spring, flexure, elastomer, or the like.

The sensor assembly 100 can further include at least one flexible printed circuit 140 (or flex tape) connected to sensor board 124. The flexible printed circuit 140 is operative to provide power, signals, or data between sensor board 124 and various devices outside of outer case structure 102, while not imparting significant mechanical forces onto the ISA.

In one embodiment, sensor assembly 100 can be implemented as part of an inertial measurement unit (IMU). As such, outer case structure 102 is implemented as an IMU outer case, isolated support structure 110 is implemented as an IMU mechanical mounting structure, and isolator structure 130 is implemented as an IMU isolator.

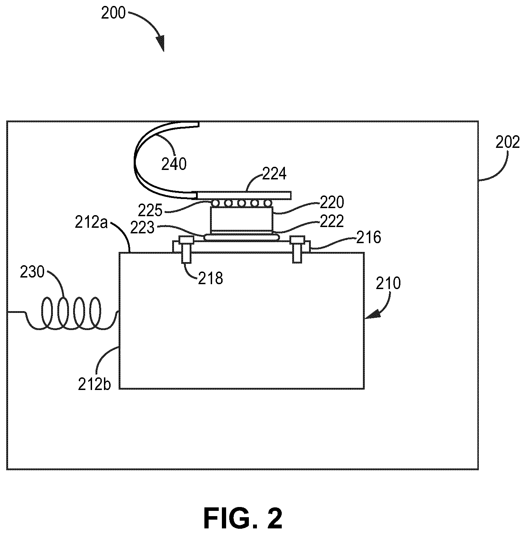

Figure 2 depicts a sensor assembly 200, according to another embodiment, which can be implemented in an ISA. The sensor assembly 200 comprises an outer case structure 202, and an isolated support structure 210 having a plurality of surfaces 212 and located within outer case structure 202. A mounting plate 216 is attached to a surface 212a of isolated support structure 210. A sensor package 220 has a sensor lid 222 that is bonded to mounting plate 216. A sensor board 224 is connected to a side of sensor package 220 opposite from sensor lid 222. At least one isolator structure 230 is coupled between a surface 212b of isolated support structure 210 and outer case structure 202.

In one embodiment, sensor package 220 includes one or more inertial sensors, such as one or more gyroscopes, and one or more accelerometers. For example, the inertial sensors can include MEMS inertial sensors.

In one embodiment, mounting plate 216 can be attached to surface 212a of isolated support structure 210 with one or more mechanical fasteners 218, such as one or more bolts or screws. The sensor lid 222 can be bonded to mounting plate 216 by various techniques, such as by an epoxy 223 (or solder, weld, or the like). The sensor board 224 can be a PCB, and can be connected to sensor package 220 by various techniques, such by solder balls 225. The isolator structure 230 can be a spring, flexure, or the like.

The sensor assembly 200 can further include at least one flexible printed circuit 240 connected to sensor board 224. The flexible printed circuit 240 is operative to provide power, signals, or data between sensor board 224 and various devices outside of outer case structure 202, while not imparting significant mechanical forces onto the ISA.

In one embodiment, sensor assembly 200 can be implemented as part of an IMU. As such, outer case structure 202 is implemented as an IMU outer case, isolated support structure 210 is implemented as an IMU mechanical mounting structure, and isolator structure 230 is implemented as an IMU isolator.

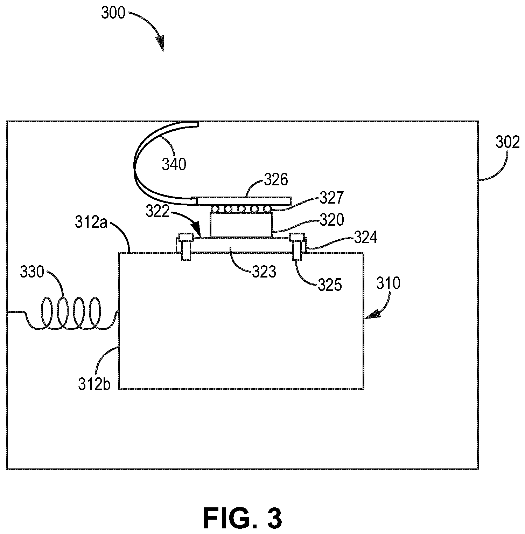

Figure 3 is a schematic diagram of a sensor assembly 300, according to a further embodiment, which can be implemented in an ISA. The sensor assembly 300 comprises an outer case structure 302, and an isolated support structure 310 having a plurality of surfaces 312 and located within outer case structure 302. A sensor package 320 has a sensor lid 322 that includes a lid portion 323 integrated with a mounting plate portion 324. The sensor package 320 is mounted to isolated support structure 310 by attaching mounting plate portion 324 of sensor lid 322 to a surface 312a of isolated support structure 310. A sensor board 326 is connected to a side of sensor package 320 opposite from sensor lid 322. At least one isolator structure 330 is coupled between a surface 312b of isolated support structure 310 and outer case structure 302.

In one embodiment, sensor package 320 includes one or more inertial sensors, such as one or more gyroscopes, and one or more accelerometers. For example, the inertial sensors can include MEMS inertial sensors.

In one embodiment, mounting plate portion 324 of sensor lid 322 can be attached to surface 312a of isolated support structure 310 with one or more mechanical fasteners 325, such as one or more bolts or screws. The sensor board 326 can be a PCB, and can be connected to sensor package 320 by various techniques, such by solder balls 327. The isolator structure 330 can be a spring, flexure, or the like.

The sensor assembly 300 can further include at least one flexible printed circuit 340 connected to sensor board 326. The flexible printed circuit 340 is operative to provide power, signals, or data between sensor board 326 and various devices outside of outer case structure 302, while not imparting significant mechanical forces onto the ISA.

In one embodiment, sensor assembly 300 can be implemented as part of an IMU. As such, outer case structure 302 is implemented as an IMU outer case, isolated support structure 310 is implemented as an IMU mechanical mounting structure, and isolator structure 330 is implemented as an IMU isolator.

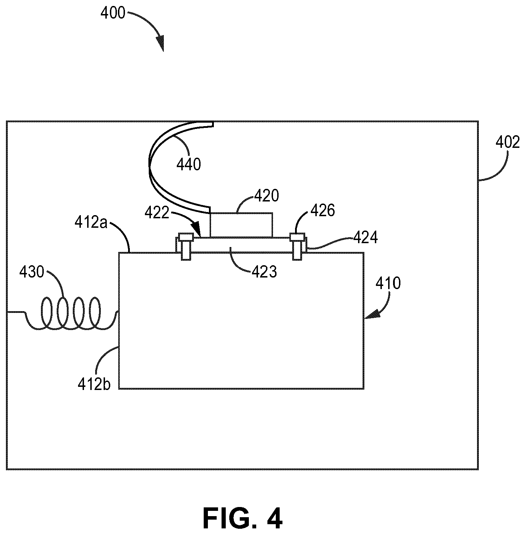

Figure 4 is a schematic diagram of a sensor assembly 400, according to a further embodiment, which can be implemented in an ISA. The sensor assembly 400 comprises an outer case structure 402, and an isolated support structure 410 having a plurality of surfaces 412 and located within outer case structure 402. A sensor package 420 has a sensor lid 422 that includes a lid portion 423 integrated with a mounting plate portion 424. The sensor package 420 is mounted to isolated support structure 410 by attaching mounting plate portion 424 of sensor lid 422 to a surface 412a of isolated support structure 410. The sensor package 420 contains one or more inertial sensors with integrated or co-packaged electronics. At least one isolator structure 430 is coupled between a surface 412b of isolated support structure 410 and outer case structure 402.

The one or more inertial sensors contained in sensor package 420 can include one or more gyroscopes, and/or one or more accelerometers. For example, the inertial sensors can include MEMS inertial sensors.

In one embodiment, mounting plate portion 424 of sensor lid 422 can be attached to surface 412a of isolated support structure 410 with one or more mechanical fasteners 426, such as one or more bolts or screws. The isolator structure 430 can be a spring, flexure, or the like.

The sensor assembly 400 can further include at least one flexible printed circuit 440 connected to sensor package 420. The flexible printed circuit 440 is operative to provide power, signals, or data between sensor package 420 and various devices outside of outer case structure 402, while not imparting significant mechanical forces onto the ISA.

In one embodiment, sensor assembly 400 can be implemented as part of an IMU. As such, outer case structure 402 is implemented as an IMU outer case, isolated support structure 410 is implemented as an IMU mechanical mounting structure, and isolator structure 430 is implemented as an IMU isolator.

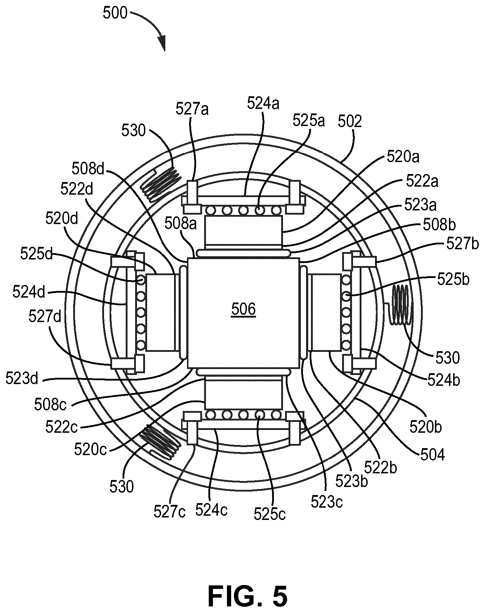

Figure 5 illustrates an IMU 500 according to one example embodiment. The IMU 500 comprises an outer case structure 502, an outer isolated support structure 504 within outer case structure 502, and an inner isolated support structure 506 having a plurality of surfaces 508 and located within outer isolated support structure 504.

A plurality of sensor packages 520 with sensor lids 522 are mounted to respective surfaces 508 of the inner isolated support structure 506. The sensor packages 520 include one or more inertial sensors, such as one or more gyroscopes, and one or more accelerometers. For example, the inertial sensors can include MEMS inertial sensors.

In particular, a first sensor package 520a has sensor lid 522a that is coupled to a first surface 508a of inner isolated support structure 506. A first sensor board 524a is connected to a side of first sensor package 520a opposite from sensor lid 522a. The sensor lid 522a can be coupled to surface 508a of inner isolated support structure 506 by various techniques, such as by an epoxy 523a (or solder, weld, or the like). The sensor board 524a can be a PCB, and can be connected to sensor package 520a by various techniques, such by solder balls 525a. The sensor board 524a is attached to outer isolated support structure 504 with one or more mechanical fasteners 527a, such as one or more bolts or screws.

In addition, a second sensor package 520b has sensor lid 522b that is coupled to a second surface 508b of inner isolated support structure 506. A second sensor board 524b is connected to a side of sensor package 520b opposite from sensor lid 522b. The sensor lid 522b can be coupled to surface 508b of inner isolated support structure 506 by various techniques, such as by an epoxy 523b. The sensor board 524b can be a PCB, and can be connected to sensor package 520b by various techniques, such by solder balls 525b. The sensor board 524b is attached to outer isolated support structure 504 with one or more mechanical fasteners 527b, such as one or more bolts or screws.

Further, a third sensor package 520c has sensor lid 522c that is coupled to a third surface 508c of inner isolated support structure 506. A third sensor board 524c is connected to a side of sensor package 520c opposite from sensor lid 522c. The sensor lid 522c can be coupled to surface 508c of inner isolated support structure 506 by various techniques, such as by an epoxy 523c. The sensor board 524c can be a PCB, and can be connected to sensor package 520c by various techniques, such by solder balls 525c. The sensor board 524c is attached to outer isolated support structure 504 with one or more mechanical fasteners 527c, such as one or more bolts or screws.

In addition, a fourth sensor package 520d has sensor lid 522d that is coupled to a fourth surface 508d of inner isolated support structure 506. A fourth sensor board 524d is connected to a side of sensor package 520d opposite from sensor lid 522d. The sensor lid 522d can be coupled to surface 508d of inner isolated support structure 506 by various techniques, such as by an epoxy 523d. The sensor board 524d can be a PCB, and can be connected to sensor package 520d by various techniques, such by solder balls 525d. The sensor board 524d is attached to outer isolated support structure 504 with one or more mechanical fasteners 527d, such as one or more bolts or screws.

A plurality of isolator structures 530 are coupled between outer isolated support structure 504 and outer case structure 502. The isolator structures 530 can be springs, flexures, or the like. The isolator structures 530 provide protection from outside shock and vibration to IMU 500.

While Figure 5 shows an IMU with sensor arrangements similar to the sensor assembly packages of Figure 1, it should be understood that in other embodiments, IMUs can be assembled using any of the sensor assembly packages of Figures 2-4.

For example, an IMU can include a plurality of mounting plates (e.g., mounting plate of Fig. 2), each coupled to a respective one of the surfaces of an inner isolated support structure, with each sensor lid bonded to a respective one of the mounting plates. Each of the mounting plates can be coupled to the inner isolated support structure with one or more bolts or screws, and each sensor lid can be bonded to a respective one of the mounting plates by a solder, a weld, or an epoxy. A plurality of sensor boards can be coupled to an outer isolated support structure, with each of the sensor packages respectively connected to one of the sensor boards.

### Example Embodiments

Example 1 includes a sensor assembly comprising: a case structure; a support structure having a plurality of surfaces and located within the case structure; at least one sensor package having a sensor lid, wherein the sensor lid is mechanically coupled to one of the surfaces of the support structure; at least one sensor board connected to the at least one sensor package; and at least one isolator structure coupled between at least one of the surfaces of the support structure and the case structure.

Example 2 includes the sensor assembly of Example 1, wherein the at least one sensor package includes one or more inertial sensors.

Example 3 includes the sensor assembly of Example 2, wherein the one or more inertial sensors includes one or more gyroscopes, and one or more accelerometers.

Example 4 includes the sensor assembly of any of Examples 1-3, wherein the sensor assembly is implemented in an integrated sensor assembly (ISA) and further comprises: at least one flexible printed circuit connected to the at least one sensor board and operative to provide power, signals, or data, while not imparting significant mechanical forces onto the ISA.

Example 5 includes the sensor assembly of any of Examples 1-4, wherein the sensor lid is coupled to the one of the surfaces of the support structure by a solder, a weld, or an epoxy.

Example 6 includes the sensor assembly of any of Examples 1-4, wherein the sensor lid is coupled to the one of the surfaces of the support structure by one or more mechanical fasteners.

Example 7 includes the sensor assembly of any of Examples 1-6, wherein the at least one sensor board is connected to the at least one sensor package with a solder.

Example 8 includes the sensor assembly of any of Examples 1-4, further comprising at least one mounting plate coupled to the support structure, wherein the sensor lid is bonded to the mounting plate.

Example 9 includes the sensor assembly of Example 8, wherein the at least one mounting plate is coupled to the support structure with bolts or screws, and the sensor lid is bonded to the mounting plate by a solder, a weld, or an epoxy.

Example 10 includes the sensor assembly of any of Examples 1-9, wherein the sensor assembly is implemented in an inertial measurement unit (IMU).

Example 11 includes a sensor assembly comprising: a case structure; a support structure having a plurality of surfaces and located within the case structure; at least one sensor package having a sensor lid that includes a lid portion integrated with a mounting plate portion, the at least one sensor package containing one or more inertial sensors with integrated or co-packaged electronics, wherein the mounting plate portion is coupled to one of the surfaces of the support structure; and at least one isolator structure coupled between at least one of the surfaces of the support structure and the case structure.

Example 12 includes the sensor assembly of Example 11, wherein the one or more inertial sensors includes one or more gyroscopes, and one or more accelerometers.

Example 13 includes the sensor assembly of any of Examples 11-12, wherein the sensor assembly is implemented in an integrated sensor assembly (ISA) and further comprises: at least one flexible printed circuit connected to the at least one sensor package and operative to provide power, signals, or data, while not imparting significant mechanical forces onto the ISA.

Example 14 includes the sensor assembly of any of Examples 11-13, wherein the mounting plate portion is coupled to the one of the surfaces of the support structure by one or more mechanical fasteners.

Example 15 includes the sensor assembly of Example 14, wherein the one or more mechanical fasteners include one or more bolts, or one or more screws.

Example 16 includes the sensor assembly of any of Examples 11-15, wherein the sensor assembly is implemented as an inertial measurement unit (IMU).

Example 17 includes a inertial measurement unit, comprising: a case structure; an outer isolated support structure within the case structure; an inner isolated support structure having a plurality of surfaces and located within the outer isolated support structure; a plurality of sensor packages each having a sensor lid that is coupled to a respective one of the surfaces of the inner isolated support structure, wherein the sensor packages include one or more inertial sensors; a plurality of sensor boards coupled to the outer isolated support structure; wherein each of the sensor packages is respectively connected to one of the sensor boards; and a plurality of isolator structures coupled between the outer isolated support structure and the case structure.

Example 18 includes the inertial measurement unit of Example 17, wherein each sensor lid is coupled to the respective one of the surfaces of the inner isolated support structure by a solder, a weld, or an epoxy.

Example 19 includes the inertial measurement unit of Example 17, further comprising a plurality of mounting plates each coupled to a respective one of the surfaces of the inner isolated support structure, wherein each sensor lid is bonded to a respective one of the mounting plates.

Example 20 includes the inertial measurement unit of Example 19, wherein each of the mounting plates is coupled to the inner isolated support structure with one or more bolts or screws, and each sensor lid is bonded to a respective one of the mounting plates by a solder, a weld, or an epoxy.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A sensor assembly comprising:
a case structure;
a support structure having a plurality of surfaces and located within the case structure;
at least one sensor package having a sensor lid, wherein the sensor lid is mechanically coupled to one of the surfaces of the support structure;
at least one sensor board connected to the at least one sensor package; and
at least one isolator structure coupled between at least one of the surfaces of the support structure and the case structure.

2. The sensor assembly of claim 1, wherein the at least one sensor package includes one or more inertial sensors.

3. The sensor assembly of claim 1, wherein the sensor assembly is implemented in an integrated sensor assembly (ISA) and further comprises:
at least one flexible printed circuit connected to the at least one sensor board and operative to provide power, signals, or data, while not imparting significant mechanical forces onto the ISA.

4. The sensor assembly of claim 1, wherein the sensor lid is coupled to the one of the surfaces of the support structure by a solder, a weld, or an epoxy.

5. The sensor assembly of claim 1, wherein the sensor lid is coupled to the one of the surfaces of the support structure by one or more mechanical fasteners.

6. The sensor assembly of claim 1, further comprising at least one mounting plate coupled to the support structure, wherein the sensor lid is bonded to the mounting plate.

7. The sensor assembly of claim 1, wherein the sensor assembly is implemented in an inertial measurement unit (IMU).

8. A sensor assembly comprising:
a case structure;
a support structure having a plurality of surfaces and located within the case structure;
at least one sensor package having a sensor lid that includes a lid portion integrated with a mounting plate portion, the at least one sensor package containing one or more inertial sensors with integrated or co-packaged electronics, wherein the mounting plate portion is coupled to one of the surfaces of the support structure; and
at least one isolator structure coupled between at least one of the surfaces of the support structure and the case structure.

9. The sensor assembly of claim 8, wherein the sensor assembly is implemented in an integrated sensor assembly (ISA) and further comprises:
at least one flexible printed circuit connected to the at least one sensor package and operative to provide power, signals, or data, while not imparting significant mechanical forces onto the ISA.

10. A inertial measurement unit, comprising:
a case structure;
an outer isolated support structure within the case structure;
an inner isolated support structure having a plurality of surfaces and located within the outer isolated support structure;
a plurality of sensor packages each having a sensor lid that is coupled to a respective one of the surfaces of the inner isolated support structure, wherein the sensor packages include one or more inertial sensors;
a plurality of sensor boards coupled to the outer isolated support structure; wherein each of the sensor packages is respectively connected to one of the sensor boards; and
a plurality of isolator structures coupled between the outer isolated support structure and the case structure.
